# EUROPEAN PATENT APPLICATION

(11) **EP 3 671 688 A1**
(43) Date of publication of application: **24.06.2020**
(21) Application number: 19217467.0
(22) Date of filing: 18.12.2019
(51) Int. Cl.: G08G 1/01, G08G 1/0968, G08G 1/14, G01C 21/34, G08G 1/005, G08G 1/0962, G08G 1/0965

(54) **METHODS AND SYSTEMS FOR AUTONOMOUS VEHICLE NAVIGATION**

(30) Priority: 20.12.2018 US 201816228109
(71) Applicant: HERE Global B.V., 5611 ZT Eindhoven (NL)
(72) Inventor: BEAUREPAIRE, Jerome, Chicago, IL 60606 (US); LINDEQUIST, Jens Von, Chicago, IL 60606 (US)
(74) Representative: Potter Clarkson

(57) **Abstract**

A method, a system, and a computer program product for navigating an autonomous vehicle are disclosed herein. The method comprises obtaining dynamic traffic information in a geographical region associated with the autonomous vehicle and determining dynamic traffic impact data of the autonomous vehicle at a first location in the geographical region, based on the dynamic traffic information. The method may further include computing a displacement threshold for displacing the autonomous vehicle from the first location based on the determined dynamic traffic impact data and determining navigation data for navigating the autonomous vehicle from the first location, based on the displacement threshold and the dynamic traffic information in the geographical region. The method may further include obtaining destination data indicating a destination of a user associated with the autonomous vehicle and determining a parking location in proximity of the destination of the user.

## Description

### FIELD OF THE PRESENT DISCLOSURE

The present disclosure generally relates to navigating an autonomous vehicle in a geographical region, and more particularly relates to navigating autonomous delivery vehicles to avoid traffic disruptions in the geographical region.

### BACKGROUND

Goods are shipped from a source location and delivered by a delivery service provider at a destination location. The delivery personnel typically halt delivery vehicles at the destination location or in proximity of the destination location and the delivery personnel unload the goods to be delivered from the delivery vehicles. The driver of the delivery vehicles either waits at the destination location or finds a suitable parking location closer to the destination location, avoiding traffic congestion in the area.

However, if the delivery vehicle is an autonomous vehicle, the parking of the autonomous delivery vehicle at a drop-off location of the delivery personnel may result in traffic congestion in the vicinity of the autonomous delivery vehicle. Such a situation may also lead to collisions between vehicles, pedestrians and hamper safety of commuters. Such congestion may also result in increase in travel time of the autonomous delivery vehicles and such delay may impede growth in business of the delivery service providers. There is a need to move an autonomous vehicle from a drop-off location until the delivery personnel returns. Moreover, there is a long felt need for intelligently maneuvering an autonomous vehicle, while waiting for delivery personnel to return, without impacting traffic in the vicinity of the autonomous vehicle.

### SUMMARY

A method, apparatus, and computer program product are provided in accordance with an example embodiment described herein for navigating an autonomous vehicle.

In one aspect, a method for navigating an autonomous vehicle is disclosed. The method includes obtaining dynamic traffic information in a geographical region associated with the autonomous vehicle, determining dynamic traffic impact data of the autonomous vehicle at a first location in the geographical region, based on the dynamic traffic information, computing a displacement threshold for displacing the autonomous vehicle from the first location based on the determined dynamic traffic impact data, and determining navigation data for navigating the autonomous vehicle from the first location, based on the displacement threshold and the dynamic traffic information in the geographical region.

The method further includes obtaining destination data indicating a destination of a user associated with the autonomous vehicle and determining a parking location in proximity of the destination of the user. The method further includes updating the determined navigation data for navigating the autonomous vehicle from the first location to the parking location. The parking is same or different from the first location. The method further includes tracking a location of a user of the autonomous vehicle, and determining a parking location based on the track of the location of the user. The dynamic traffic information includes one or more of destination data of a user associated with the autonomous vehicle, traffic data in the geographical region, time data associated with the traffic data, street geometry data of one or more pathways in the geographical region, traffic light timing data in the geographical region, functional class of the one or more pathways in the geographical region, and/or environmental conditions in the geographical region.

The dynamic traffic impact data includes volume of traffic in vicinity of the autonomous vehicle and/or flow rate of the traffic in the vicinity of the autonomous vehicle and the dynamic traffic impact data is determined from sensor data generated by a plurality of sensors or communication data transmitted by traffic in vicinity of the autonomous vehicle.

In another aspect, an apparatus for navigating an autonomous vehicle is disclosed. The system comprises at least one non-transitory memory configured to store computer program code instructions; and at least one processor configured to execute the computer program code instructions to: obtain dynamic traffic information in a geographical region associated with the autonomous vehicle, determine dynamic traffic impact data of the autonomous vehicle at a first location in the geographical region, based on the dynamic traffic information, compute a displacement threshold for displacing the autonomous vehicle from the first location based on the determined dynamic traffic impact data, and determine navigation data for navigating the autonomous vehicle from the first location, based on the displacement threshold and the dynamic traffic information in the geographical region. The processor is further configured to obtain destination data indicating a destination of a user associated with the autonomous vehicle, and determine a parking location in proximity of the destination of the user. In an embodiment, the processor is further configured to update the determined navigation data for navigating the autonomous vehicle from the first location to the parking location. The processor is further configured to track a location of a user of the autonomous vehicle and determine a parking location based on the track of the location of the user

In yet another aspect, a system for navigating an autonomous vehicle is disclosed. The system comprises a map database and a navigation control apparatus communicatively coupled to the map database. The map database is configured to store map data associated with a geographical region. The navigation control apparatus comprises at least one non-transitory memory configured to store computer program code instructions and at least one processor configured to execute the computer program code instructions to: obtain dynamic traffic information in a geographical region associated with the autonomous vehicle, determine dynamic traffic impact data of the autonomous vehicle at a first location in the geographical region, based on the dynamic traffic information, compute a displacement threshold for displacing the autonomous vehicle from the first location based on the determined dynamic traffic impact data, and determine navigation data for navigating the autonomous vehicle from the first location, based on the displacement threshold and the dynamic traffic information in the geographical region.

The following numbered paragraphs are also disclosed:
1. A method for navigating an autonomous vehicle, the method comprising:
   obtaining dynamic traffic information in a geographical region associated with the autonomous vehicle;
   determining dynamic traffic impact data of the autonomous vehicle at a first location in the geographical region, based on the dynamic traffic information;
   computing a displacement threshold for displacing the autonomous vehicle from the first location based on the determined dynamic traffic impact data; and
   determining navigation data for navigating the autonomous vehicle from the first location, based on the displacement threshold and the dynamic traffic information in the geographical region.
2. The method of paragraph 1, further comprising
   obtaining destination data indicating a destination of a user associated with the autonomous vehicle; and
   determining a parking location in proximity of the destination of the user.
3. The method of paragraph 2, further comprising updating the determined navigation data for navigating the autonomous vehicle from the first location to the parking location.
4. The method of claim 3, wherein the parking location is one of same or different from the first location.
5. The method of paragraph 1, further comprising:
   tracking a location of a user of the autonomous vehicle; and
   determining a parking location based on the track of the location of the user.
6. The method of paragraph 1, wherein the dynamic traffic information comprises one or more of destination data of a user associated with the autonomous vehicle, traffic data in the geographical region, time data associated with the traffic data, street geometry data of one or more pathways in the geographical region, traffic light timing data in the geographical region, functional class of the one or more pathways in the geographical region, or environmental conditions in the geographical region.
7. The method of paragraph 1, wherein the dynamic traffic impact data comprises at least one of volume of traffic in vicinity of the autonomous vehicle or flow rate of the traffic in the vicinity of the autonomous vehicle.
8. The method of paragraph 1, wherein the dynamic traffic impact data is determined from one of sensor data generated by a plurality of sensors or communication data transmitted by traffic in vicinity of the autonomous vehicle.
9. An apparatus for navigating an autonomous vehicle, the apparatus comprising:
   at least one non-transitory memory configured to store instructions;
   at least one processor configured to execute the instructions to:
      obtain dynamic traffic information in a geographical region associated with the autonomous vehicle;
      determine dynamic traffic impact data of the autonomous vehicle at a first location in the geographical region, based on the dynamic traffic information;
      compute a displacement threshold for displacing the autonomous vehicle from the first location based on the determined dynamic traffic impact data; and
      determine navigation data for navigating the autonomous vehicle from the first location, based on the displacement threshold and the dynamic traffic information in the geographical region.
10. The apparatus of paragraph 9, wherein the at least one processor is further configured to:
   obtain destination data indicating a destination of a user associated with the autonomous vehicle; and
   determine a parking location in proximity of the destination of the user.
11. The apparatus of paragraph 10, wherein the at least one processor is further configured to update the determined navigation data for navigating the autonomous vehicle from the first location to the parking location.
12. The apparatus of paragraph 10, wherein the parking location is one of same or different from the first location.
13. The apparatus of paragraph 9, wherein the at least one processor is further configured to:
   track a location of a user of the autonomous vehicle; and
   determine a parking location based on the track of the location of the user.
14. The apparatus of paragraph 9, wherein the dynamic traffic information comprises one or more of destination data of a user associated with the autonomous vehicle, traffic data in the geographical region, time data associated with the traffic data, street geometry data of one or more pathways in the geographical region, traffic light timing data in the geographical region, functional class of the one or more pathways in the geographical region, or environmental conditions in the geographical region.
15. The apparatus of paragraph 9, wherein the dynamic traffic impact data comprises at least one of volume of traffic in vicinity of the autonomous vehicle or flow rate of traffic in the vicinity of the autonomous vehicle.
16. The apparatus of paragraph 9, wherein the at least one processor is configured to determine the dynamic traffic impact data from one of sensor data generated by a plurality of sensors or communication data transmitted by traffic in vicinity of the autonomous vehicle.
17. A system for navigating an autonomous vehicle, the system comprising:
   a map database configured to store map data associated with a geographical region; and
   a navigation control apparatus communicatively coupled to the map database, the navigation control apparatus comprising:
      at least one non-transitory memory configured to store computer program code instructions;
      at least one processor configured to execute the computer program code instructions to:
         obtain dynamic traffic information in the geographical region associated with the autonomous vehicle;
         determine dynamic traffic impact data of the autonomous vehicle at a first location in the geographical region, based on the dynamic traffic information;
         compute a displacement threshold for displacing the autonomous vehicle from the first location based on the determined dynamic traffic impact data;
         obtain the map data of the geographical region from the map database;
         determine navigation data for navigating the autonomous vehicle from the first location, based on the displacement threshold, the dynamic traffic information, and the obtained map data of the geographical region.
18. The system of paragraph 17, wherein the at least one processor is further configured to:
   obtain destination data indicating a destination of a user associated with the autonomous vehicle; and
   determine a parking location in proximity of the destination of the user.
19. The system of paragraph 18, wherein the at least one processor is further configured to update the determined navigation data for navigating the autonomous vehicle from the first location to the parking location.
20. The system of paragraph 17, wherein the at least one processor is further configured to:
   track a location of a user of the autonomous vehicle; and
   determine a parking location based on the track of the location of the user.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE DRAWINGS

Having thus described example embodiments of the invention in general terms, reference will now be made to the accompanying drawings, which are not necessarily drawn to scale, and wherein:
FIG. 1 illustrates a schematic diagram of an exemplary navigation scenario in which a system for navigating an autonomous vehicle is implemented, in accordance with one or more example embodiments;
FIG. 2 illustrates a block diagram of the system for navigating the autonomous vehicle, in accordance with one or more example embodiments;
FIG. 3 describes a block diagram of the working environment of the system exemplarily illustrated in FIG. 2;
FIG. 4 exemplarily illustrates a method for navigating the autonomous vehicle, in accordance with an example embodiment;
FIG. 5 illustrates a flowchart comprising steps for navigating the autonomous vehicle from a first location by the system, in accordance with an example embodiment;
FIG. 6 illustrates a scenario where an autonomous vehicle is navigated by the system; and
FIG. 7 illustrates a user interface showing real-time navigation data generated by the system, to assist a user of the autonomous vehicle.

### DETAILED DESCRIPTION

In the following description, for purposes of explanation, numerous specific details are set forth in order to provide a thorough understanding of the present disclosure. It will be apparent, however, to one skilled in the art that the present disclosure can be practiced without these specific details. In other instances, apparatuses and methods are shown in block diagram form only in order to avoid obscuring the present disclosure.

Reference in this specification to "one embodiment" or "an embodiment" means that a particular feature, structure, or characteristic described in connection with the embodiment is included in at least one embodiment of the present disclosure. The appearance of the phrase "in one embodiment" in various places in the specification are not necessarily all referring to the same embodiment, nor are separate or alternative embodiments mutually exclusive of other embodiments. Further, the terms "a" and "an" herein do not denote a limitation of quantity, but rather denote the presence of at least one of the referenced items. Moreover, various features are described which may be exhibited by some embodiments and not by others. Similarly, various requirements are described which may be requirements for some embodiments but not for other embodiments.

Some embodiments of the present invention will now be described more fully hereinafter with reference to the accompanying drawings, in which some, but not all, embodiments of the invention are shown. Indeed, various embodiments of the invention may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present invention. Thus, use of any such terms should not be taken to limit the spirit and scope of embodiments of the present invention.

Additionally, as used herein, the term 'circuitry' may refer to (a) hardware-only circuit implementations (for example, implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network device, other network device, and/or other computing device.

The embodiments are described herein for illustrative purposes and are subject to many variations. It is understood that various omissions and substitutions of equivalents are contemplated as circumstances may suggest or render expedient but are intended to cover the application or implementation without departing from the spirit or the scope of the present disclosure. Further, it is to be understood that the phraseology and terminology employed herein are for the purpose of the description and should not be regarded as limiting. Any heading utilized within this description is for convenience only and has no legal or limiting effect.

### DEFINITIONS

The term "user equipment" may be used to refer to any user accessible device such as a mobile phone, a smartphone, a portable computer, and the like that is portable in itself or as a part of another portable object.

The term "road sign" may be used to refer to signs positioned at the side of or above roads to provide information to road users. The road signs may include speed limit sign, street name sign, school sign, 'men at work' sign, a yellow lane marking, an underpass sign, an overpass sign, a road marking, or a lane marking etc.

The term "link" may be used to refer to any connecting pathway including but not limited to a roadway, a highway, a freeway, an expressway, a lane, a street path, a road, an alley, a controlled access roadway, a free access roadway and the like.

The term "route" may be used to refer to a path from a source location to a destination location on any link.

### END OF DEFINITIONS

A method, system, and computer program product are provided herein in accordance with an example embodiment for navigating an autonomous vehicle in a geographical region. In some example embodiments, the method, system, and computer program product provided herein may also be used for navigating the autonomous vehicle to reduce impact on traffic in the geographical region. The method, system, and computer program product disclosed herein provide for optimal delivery of goods and packages at destination addresses by delivery personnel without creating major traffic disruption by leveraging smart algorithms that dynamically monitor and optimize the traffic related impact of autonomous vehicles used by the delivery personnel.

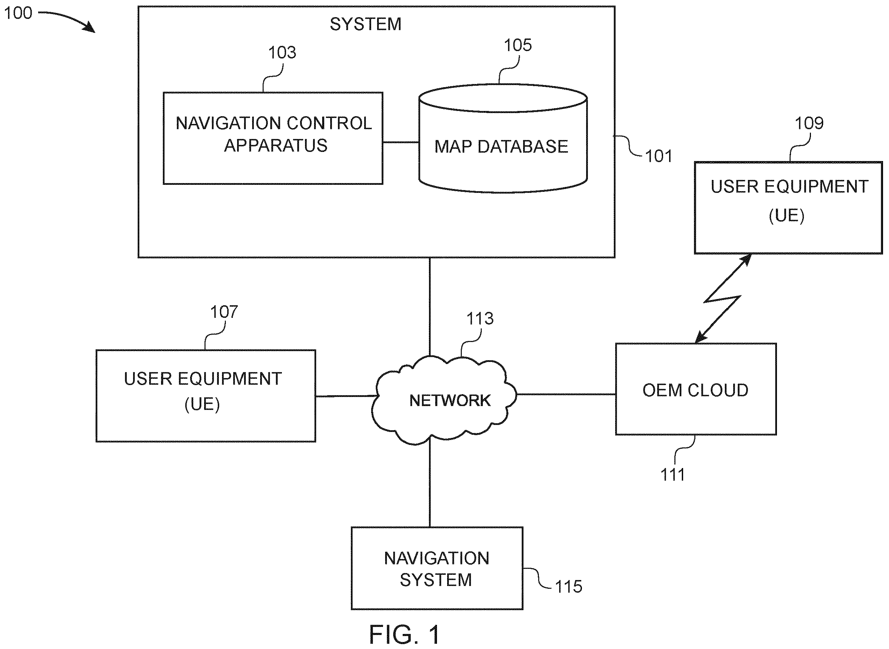

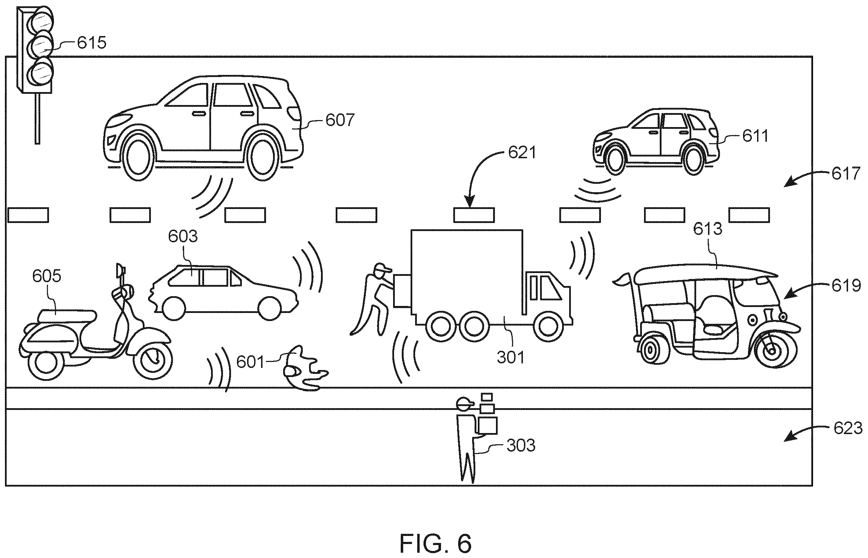

FIG. 1 illustrates a schematic diagram of an exemplary navigation scenario 100 in which a system 101 for navigating an autonomous vehicle is implemented, in accordance with one or more example embodiments. The autonomous vehicle may refer to a vehicle having autonomous driving capabilities at least in some conditions. For example, the autonomous vehicle may exhibit autonomous driving on streets and roads having physical dividers between driving lanes as exemplarily illustrated in FIG. 6. The autonomous vehicle may be used for multiple purposes, such as, delivery of goods or parcels, taxi service, etc., and hereafter an autonomous vehicle is referred to as "an autonomous delivery vehicle". The autonomous delivery vehicle may be installed with a navigation system 115 that navigates the autonomous delivery vehicle. The navigation system 115 is in communication with a plurality of sensors installed in or on the autonomous delivery vehicle for navigating smoothly and safely, without causing mishaps. The autonomous delivery vehicle may have to pick goods from a start location and drop the goods at a destination location. The autonomous delivery vehicle may wait at the start location and the destination location for on-boarding and/or de-boarding of the goods. Delivery person may on-board or de-board the goods. The delivery person may not drive or park the autonomous delivery vehicle. The autonomous delivery vehicle may halt at a drop-off location and the delivery person may de-board the goods. The delivery person may use last mile connectivity to deliver the goods at the delivery address. While waiting for the delivery person to return after delivery of the goods, the autonomous delivery vehicle may result in creating traffic disruption around the autonomous delivery vehicle. The autonomous delivery vehicle may employ the system 101 for determining conditions that cause traffic disruption. The system 101 may estimate whether the traffic disruption may get better or worse. The system 101 may further compute a suitable strategy for the autonomous delivery vehicle, to lower the traffic disruption during the goods are being delivered by the delivery person. In an embodiment, the system 101 is in communication with the navigation system 115 via a network 113. In an embodiment, the system 101 may be installed in the autonomous delivery vehicle.

The system 101 may include a navigation control apparatus 103 in communication with a map database 105. The system 100 may be communicatively coupled to one or more user equipment 107 via the network 113. One or more user equipment 109 may be communicatively connected to an OEM cloud 111 which in turn may be accessible to the system 101 via the network 113. In an embodiment, the system may be installed as a part of the one or more use equipment 107 and 109. The user equipment 107 and 109 may be installed in the autonomous delivery vehicle. In an embodiment, the user equipment 107 and 109 may be carried by the delivery person.

The one or more user equipment 107 and 109 may capture sensor data such as, traffic data in the vicinity of the autonomous delivery vehicle, time of day, traffic light timings in the vicinity of the autonomous delivery vehicle, road signs in the vicinity of the autonomous delivery vehicle, etc. Additionally or optionally, the user equipment 107 and 109 may comprise a navigation application that may be configured to access the system 100 by the delivery person using the autonomous delivery vehicle. The user equipment 107 and 109 may provide route guidance and navigation related functions to the delivery person to reach the autonomous delivery vehicle, after delivery of the goods. The one or more user equipment 107 and 109 may comprise sensors to capture the sensor data, such as, a camera for capturing images of road signs along the road, one or more position sensors to obtain location data of traffic in the vicinity of the autonomous delivery vehicle, one or more motion sensors to obtain speed data of the autonomous delivery vehicle, and to determine traffic flow rate in the vicinity of the autonomous delivery vehicle at the locations at which the images are captured. In an embodiment, the plurality of sensors may be installed in the autonomous delivery vehicle to capture the sensor data directly in communication with the system 101 and the navigation system 115. In an embodiment, a plurality of sensors may also be installed along pathways in the geographical region and the sensors may communicate with eth user equipment in obtains the sensor data.

In some example embodiments, the user equipment 107 and 109 may be the autonomous delivery vehicle itself, or a part thereof. In some example embodiments, the user equipment 107 and 109 may correspond to devices installed in the autonomous delivery vehicle such as an infotainment system, a control system of the electronics, or a mobile phone connected with the control electronics of the autonomous delivery vehicle. In some example embodiments, the system 101 and the navigation system 115 may directly obtain the sensor data from the user equipment 107. In some example embodiments, the sensor data may be accessible to the system 101 from the OEM cloud 111. For this purpose, the user equipment 109 may upload the captured sensor data to the OEM cloud 111 sequentially or in batches which may then be bundled by the OEM cloud 111 for access by the system 101 and the navigation system 115. In an embodiment, the user equipment 107 and 109 may include components, for example, a transceiver that supports vehicle-to-vehicle communication and vehicle-to-infrastructure communication by the autonomous delivery vehicle. The vehicle-to-vehicle communication may take place over the network 113. The vehicle-to-vehicle communication may be in the form of messages sent from other vehicle to the autonomous delivery vehicle and from the autonomous delivery vehicle to the other vehicles. The messages may include speed, location, direction of travel, braking, and loss of stability information of the vehicles. The vehicle-to-vehicle communication messages may be displayed on the user equipment 107 and 109.

In some example embodiments, the user equipment 107 and 109 may include a mobile computing device such as a laptop computer, tablet computer, mobile phone, smart phone, navigation unit, personal data assistant, watch, camera, or the like. Additionally or alternatively, the user equipment 107 and 109 may comprise a fixed computing device, such as a personal computer. The user equipment 101 may be configured to access the map database 105 of the system 101 through, for example, a user interface of a mapping application, such that the user equipment 107 and 109 may provide directional assistance to the delivery person among other services provided through access to the system 101. In an embodiment, the user interface of the user equipment 107 and 109 allows the delivery person to input destination data indicating destination of delivery of goods.

The network 113 may be wired, wireless, or any combination of wired and wireless communication networks, such as cellular, Wi-Fi, internet, local area networks, or the like. In one embodiment, the network 113 may include one or more networks such as a data network, a wireless network, a telephony network, or any combination thereof. It is contemplated that the data network may be any local area network (LAN), metropolitan area network (MAN), wide area network (WAN), a public data network (e.g., the Internet), short range wireless network, or any other suitable packet-switched network, such as a commercially owned, proprietary packet-switched network, e.g., a proprietary cable or fiber-optic network, and the like, or any combination thereof. In addition, the wireless network may be, for example, a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), Long Term Evolution (LTE) networks, code division multiple access (CDMA), wideband code division multiple access (WCDMA), wireless fidelity (Wi-Fi), wireless LAN (WLAN), Bluetooth®, Internet Protocol (IP) data casting, satellite, mobile ad-hoc network (MANET), and the like, or any combination thereof.

As exemplarily illustrated, the map database 105 may store node data, road segment data or link data, point of interest (POI) data, posted signs related data or the like. The map database 105 may also include cartographic data, routing data, and/or maneuvering data. According to some example embodiments, the road segment data records may be links or segments representing roads, streets, or paths, as may be used in calculating a route or recorded route information for determination of one or more personalized routes. The node data may be end points corresponding to the respective links or segments of road segment data. The road/ link data and the node data may represent a road network, such as used by vehicles, for example, cars, trucks, buses, motorcycles, and/or other entities. Optionally, the map database 105 may contain path segment and node data records or other data that may represent pedestrian paths or areas in addition to or instead of the vehicle road record data, for example. The road/link segments and nodes may be associated with attributes, such as geographic coordinates, street names, address ranges, speed limits, turn restrictions at intersections, and other navigation related attributes, as well as POIs, such as fueling stations, hotels, restaurants, museums, stadiums, offices, auto repair shops, buildings, stores, parks, etc. The map database 105 may include data about the POIs and their respective locations in the POI records. The map database 105 may additionally include data about places, such as cities, towns, or other communities, and other geographic features such as bodies of water, mountain ranges, etc. Such place or feature data may be part of the POI data or may be associated with POIs or POI data records (such as a data point used for displaying or representing a position of a city). In addition, the map database 105 may include event data (e.g., traffic incidents, construction activities, scheduled events, unscheduled events, etc.) associated with the POI data records or other records of the map database 105. The map database 105 may additionally include data related to road signs and last mile connectivity information from different locations in a geographical region.

A content provider such as a map developer may maintain the map database 105. By way of example, the map developer may collect geographic data to generate and enhance the map database 105. There may be different ways used by the map developer to collect data. These ways may include obtaining data from other sources, such as municipalities or respective geographic authorities. In addition, the map developer may employ field personnel to travel by vehicle along roads throughout geographic regions to observe features and/or record information about them, for example. Crowdsourcing of geographic map data may also be employed to generate, substantiate, or update map data. For example, sensor data from a plurality of data probes, which may be, for example, vehicles traveling along a road network or within a venue, may be gathered and fused to infer an accurate map of an environment in which the data probes are moving. Such sensor data may be updated in real time such as on an hourly basis, to provide accurate and up to date map data. The sensor data may be from any sensor that may inform a map database of features within an environment that are appropriate for mapping. For example, motion sensors, inertia sensors, image capture sensors, proximity sensors, LIDAR (light detection and ranging) sensors, ultrasonic sensors etc. The gathering of large quantities of crowd-sourced data may facilitate the accurate modeling and mapping of an environment, whether it is a road segment or the interior of a multilevel parking structure. Also, remote sensing, such as aerial or satellite photography, may be used to generate map geometries directly or through machine learning as described herein.

The map database 105 may be a master map database stored in a format that facilitates updating, maintenance, and development. For example, the master map database or data in the master map database may be in an Oracle spatial format or other spatial format, such as for development or production purposes. The Oracle spatial format or development/production database may be compiled into a delivery format, such as a geographic data files (GDF) format. The data in the production and/or delivery formats may be compiled or further compiled to form geographic database products or databases, which may be used in end user navigation devices or systems.

For example, geographic data may be compiled (such as into a platform specification format (PSF) format) to organize and/or configure the data for performing navigation-related functions and/or services, such as route calculation, route guidance, map display, speed calculation, distance and travel time functions, and other functions, by a navigation device, for example. The navigation-related functions may correspond to vehicle navigation, pedestrian navigation, navigation to a favored parking spot or other types of navigation. While example embodiments described herein generally relate to vehicular travel and parking along roads, example embodiments may be implemented for bicycle travel along bike paths and bike rack/parking availability, boat travel along maritime navigational routes including dock or boat slip availability, etc. The compilation to produce the end user databases may be performed by a party or entity separate from the map developer. For example, a customer of the map developer, such as a navigation device developer or other end user device developer, may perform compilation on a received map database in a delivery format to produce one or more compiled navigation databases.

In some embodiments, the map database 105 may be a master geographic database configured at a server side, but in alternate embodiments, a client side map database 105 may represent a compiled navigation database that may be used in or with end user devices (e.g., one or more user equipment 107 and 109) to provide navigation, speed adjustment and/or map-related functions to navigate through roadwork zones. The map database 105 may be used with the end user device, the user equipment 107 and 109, to provide the delivery person with navigation features. In such a case, the map database 105 may be downloaded or stored on the user equipment 107 and 109 which may access the system 101 through a wireless or wired connection, over the network 113.

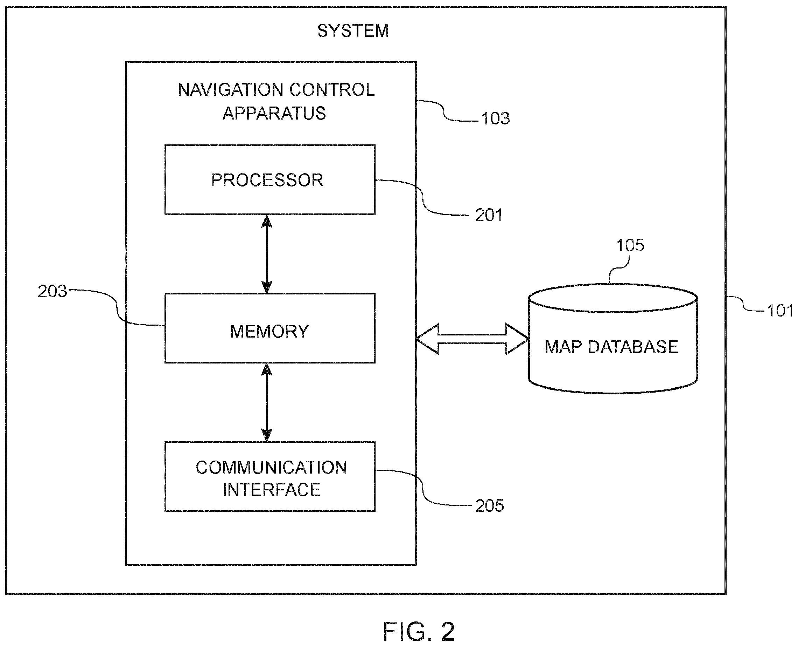

FIG. 2 illustrates a block diagram of the system 101 for navigating an autonomous vehicle, the autonomous delivery vehicle, in accordance with one or more example embodiments of the present invention. The system 101 may include the navigation control apparatus 103 in communication with the map database 105 as disclosed in the detailed description of FIG. 1. The system 101 may be locally positioned in the autonomous delivery vehicle 301. In an embodiment, the system 101 may be located remotely in a cloud and may communicate with the navigation system 115 of the autonomous delivery vehicle 301. The navigation control apparatus 103 may include a processing means such as at least one processor 201, a storage means such as at least one memory 203, and a communication means such as at least one communication interface 205. The processor 201 may retrieve computer program code instructions that may be stored in the memory 203 for execution of the computer program code instructions.

The processor 201 may be embodied in a number of different ways. For example, the processor 201 may be embodied as one or more of various hardware processing means such as a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processor 201 may include one or more processing cores configured to perform independently. A multi-core processor may enable multiprocessing within a single physical package. Additionally or alternatively, the processor 201 may include one or more processors configured in tandem via the bus to enable independent execution of instructions, pipelining and/or multithreading.

Additionally or alternatively, the processor 201 may include one or more processors capable of processing large volumes of workloads and operations to provide support for big data analysis. In an example embodiment, the processor 201 may be in communication with a memory 203 via a bus for passing information among components of the system 100. The memory 203 may be non-transitory and may include, for example, one or more volatile and/or non-volatile memories. In other words, for example, the memory 203 may be an electronic storage device (for example, a computer readable storage medium) comprising gates configured to store data (for example, bits) that may be retrievable by a machine (for example, a computing device like the processor 201). The memory 203 may be configured to store information, data, content, applications, instructions, or the like, for enabling the apparatus to carry out various functions in accordance with an example embodiment of the present invention. For example, the memory 203 could be configured to buffer input data for processing by the processor 201. As exemplarily illustrated in FIG. 2, the memory 203 may be configured to store instructions for execution by the processor 201. As such, whether configured by hardware or software methods, or by a combination thereof, the processor 201 may represent an entity (for example, physically embodied in circuitry) capable of performing operations according to an embodiment of the present invention while configured accordingly. Thus, for example, when the processor 201 is embodied as an ASIC, FPGA or the like, the processor 201 may be specifically configured hardware for conducting the operations described herein. Alternatively, as another example, when the processor 201 is embodied as an executor of software instructions, the instructions may specifically configure the processor 201 to perform the algorithms and/or operations described herein when the instructions are executed. However, in some cases, the processor 201 may be a processor specific device (for example, a mobile terminal or a fixed computing device) configured to employ an embodiment of the present invention by further configuration of the processor 201 by instructions for performing the algorithms and/or operations described herein. The processor 201 may include, among other things, a clock, an arithmetic logic unit (ALU) and logic gates configured to support operation of the processor 201.

In some embodiments, the processor 201 may be configured to provide Internet-of-Things (IoT) related capabilities to users of the system 101 disclosed herein, such as, the delivery person and the delivery service provider companies. The IoT related capabilities may in turn be used to provide smart city solutions by providing real time parking updates, big data analysis, and sensor-based data collection by using the cloud based mapping system for providing navigation and parking recommendation services to the autonomous delivery vehicle. In some embodiments, the system 101 may be configured to provide an environment for development of parking strategy recommendation solutions for navigation systems in accordance with the embodiments disclosed herein. The environment may be accessed using the communication interface 205. The communication interface 205 may provide an interface for accessing various features and data stored in the system 101.

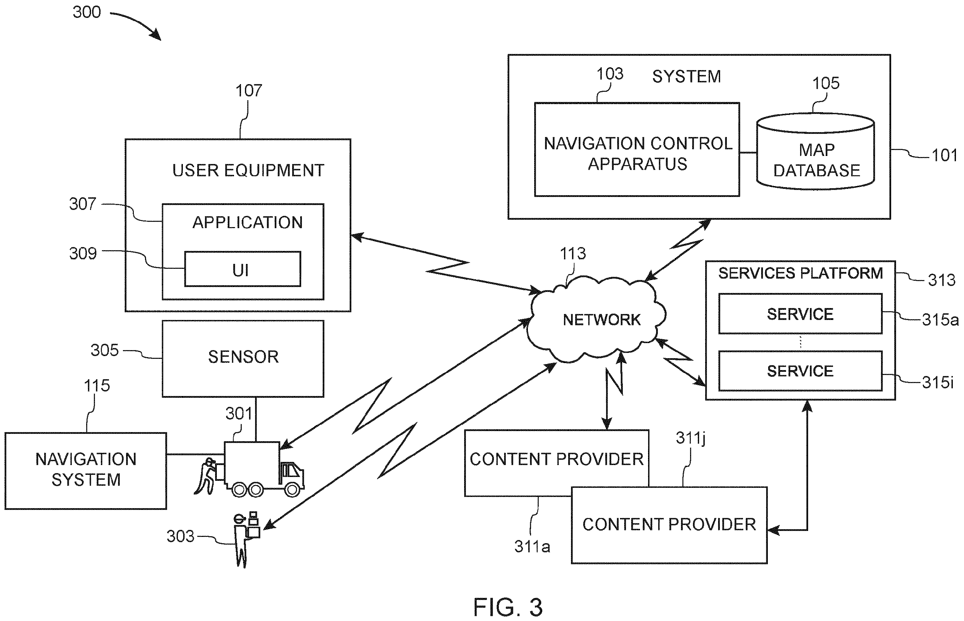

FIG. 3 describes a block diagram of the working environment 300 of the system exemplarily illustrated in FIG. 2. The system 101 may be communicatively coupled to one or more user equipment 107 and 109. The user equipment 109 may be carried by the delivery person 303. The system 101 may also be communicatively coupled to the navigation system 115 of the autonomous delivery vehicle 301. In the exemplary scenario depicted in FIG. 3, the user equipment 107 and 109 may be a considered to be a smartphone that runs an application 307 such as a navigation application on a user interface (UI) 309. Although two user equipment are described herein, it may be contemplated that fewer or a greater number of user equipment may be present. In one embodiment, the system 101 may communicate with the one or more user equipment 107 and 109 (through, for example, the communication interface 205), to obtain the sensor data. In an embodiment, the system 101 may obtain sensor data from the sensors 305 positioned in/on the autonomous delivery vehicle 301. In an embodiment, the system 100 may obtain via the communication interface 205 some or all of the sensor data from the OEM cloud 111 over the network 113.

The sensor data may be received from the sensors installed in the surroundings of the autonomous delivery vehicle 301 using components, such as, a transceiver supporting vehicle to vehicle communication via the communication interface 205. The sensors 305 may detect static road signs positioned along the pathways. In an embodiment, the sensors 305 may detect digital or dynamic signs, such as, LED panels, LCD panels, etc., positioned along the pathways. In some example embodiments, the navigation control apparatus 103 may receive through the communication interface 205, destination information of the delivery person on the user equipment 107 and 109 via the network 113. Motion data may be captured by one or more motion sensors, for example, accelerometer of the autonomous delivery vehicle 301. The autonomous delivery vehicle 301 may thus include one or more sensors 305 such as a camera, an acceleration sensor, a gyroscopic sensor, a LIDAR sensor, a proximity sensor, a motion sensor, a speed sensor and the like.

The sensors 305 may primarily be used for detecting road signs, determining speed and position of the autonomous delivery vehicle. The LIDAR sensor may measure the distance to objects including traffic in the surroundings of the autonomous delivery vehicle 301. The camera in the autonomous delivery vehicle 301 may capture the road signs and detects the traffic lights in the surroundings of the autonomous delivery vehicle. In one or more embodiments, the sensors 305, excluding the LIDAR sensor, may be built-in or embedded into or within interior of the vehicle 301. The LIDAR sensor may be positioned exterior to the autonomous delivery vehicle 301, on the roof of the autonomous delivery vehicle 301. The autonomous delivery vehicle 301 may use communication signals for accurate position determination. The autonomous delivery vehicle 301 may receive location data from a positioning system, a Global Navigation Satellite System, such as Global Positioning System (GPS), Galileo, GLONASS, BeiDou, etc., cellular tower location methods, access point communication fingerprinting such as Wi-Fi or Bluetooth based radio maps, or the like. In some embodiments, the sensors 305 in/on the autonomous delivery vehicle 301 may transmit the sensor data to the OEM cloud as disclosed in the detailed description of FIG. 1. The sensors 305 in/on the autonomous delivery vehicle 301 may capture positions of human operators (delivery person 303) of the autonomous delivery vehicle 301 and human operators of the other vehicles in the surroundings of the autonomous delivery vehicles 301. The processor 201 of the navigation control apparatus 103 may obtain the sensor data from the OEM cloud 111.

The sensor data may indicate dynamic traffic information in a geographical region. The dynamic traffic information may include real-time position of traffic around the autonomous delivery vehicle, traffic data in the geographical region, traffic light timing data associated with the geographical region, time data in the geographical region, and environmental conditions in the geographical region. That is, the dynamic traffic information may include time of the day in the geographical region, data related to visibility of the autonomous delivery vehicle 301 to overtake traffic in the geographical region, presence of policemen in the geographical region, and traffic light timings in the geographical region. The processor 201 of the navigation control apparatus 103 may obtain the dynamic traffic information from the sensors 305. The dynamic traffic information may further include the functional class of pathways in the geographical region, number of lane in the geographical region, street geometry in the geographical region, etc. The processor 201 may obtain such dynamic traffic information from the map database 105. In an embodiment, the processor 201 may also obtain information related ability of the delivery person in the autonomous delivery vehicle 301 to maneuver the autonomous delivery vehicle 301 in a risky situation. The processor 201 may also access historic traffic data in the geographical region during different times of the day from the map database 105. The processor 201 may also obtain routing graphs or typical navigation routes in the geographical region and parking locations in the geographical region. Using the communication interface 205, the processor 201 may obtain the destination data of the autonomous delivery vehicle 301 from the delivery person 303. In an embodiment, the processor 201 may obtain the destination data of the autonomous delivery vehicle 301 from the application 307 on the user equipment 107 and 109. Based on the destination data of the autonomous delivery vehicle 301, the autonomous delivery vehicle 301 may select a first location in the vicinity of the delivery address associated with the goods to be delivered.

Based on the dynamic traffic information of the autonomous delivery vehicle 301 at the first location in the geographical region, the processor 201 of the navigation control apparatus 103 may determine dynamic traffic impact data of the autonomous delivery vehicle 301 at the first location. That is, the processor 201 may determine after-effects of halting or parking the autonomous delivery vehicle 301 at the first location on the traffic in the vicinity of the first location. The processor 201 may determine volume of traffic in the vicinity of the autonomous delivery vehicle 301 based on the dynamic traffic information at the first location. In an embodiment, the processor 201 may also determine flow rate of the traffic in the vicinity of the autonomous delivery vehicle 301. The processor 201 may determine whether the autonomous delivery vehicle 203 is disrupting the traffic in the geographical region. Based on the traffic light timing in the vicinity of the first location, traffic in opposite lane of the pathway, etc., the processor 201 determines whether the traffic disruption caused at the first location will improve or worsen.

In an embodiment, the processor 201 may determine the dynamic traffic impact data based on communication data transmitted from traffic in the vicinity of the autonomous delivery vehicle. The processor 201 may use sensor data generated from components supporting vehicle to vehicle communication. The sensor data may include communication data from the other vehicles reporting that the other vehicles are blocked in the vicinity of the autonomous delivery vehicle 301. The processor 201 may obtain sensor data indicating a few vehicles or traffic stuck behind the autonomous delivery vehicle 301 and none of the stuck vehicles are overtaking the autonomous delivery vehicle 301 within a span of one minute. The processor 201 may obtain sensor data including the speed of vehicle or traffic next to the autonomous delivery vehicle 301 in the other lane of the pathway at the first location. In an embodiment, the processor 201 may determine a traffic congestion caused by one or more vehicles, such a vehicle trying to find an on-street parking spot, in the vicinity of the autonomous delivery vehicle 301.

In one embodiment, the user device or the user equipment 107 may be an in-vehicle navigation system, such as, an infotainment system, a personal navigation device (PND), a portable navigation device, a cellular telephone, a smart phone, a personal digital assistant (PDA), a watch, a camera, a computer, a workstation, and/or other device that may perform navigation-related functions, such as digital routing and map display. The system 101 may be included as a part of the user equipment 107. In an embodiment, the navigation control apparatus 103 may be part of the user equipment 107 and the user equipment 107 may access the map database 105 via the network 113. Delivery person 303 in the autonomous delivery vehicle 301 may request for navigation and map functions such as guidance and map display in the application on the user equipment 107 and 109, according to some example embodiments. In some embodiments, the user equipment 107 and 109 may be notified by the system 101 about the traffic impact data caused due to the autonomous delivery vehicle at the first location. The user equipment 109 carried by the delivery person 303 may allow him/her to input the destination address of the goods and may allow him/her to remotely communicate with the system 101 while the delivery person 303 is navigating towards the destination address of the goods need to be delivered. In an embodiment, the user equipment 109 carried by the delivery person 303 may be a tablet computing device, a mobile computer, a mobile phone, a smart phone, a portable computing device, a laptop, a personal digital assistant, a wearable device such as the Google Glass® of Google Inc., the Apple Watch® of Apple Inc., the Android Smartwatch® of Google Inc., etc., a touch centric device, etc. In an embodiment, the processor 201 may track the location of the delivery person 303 using the user equipment 109 carried by the delivery person 303.

Probe data collected by the autonomous delivery vehicle 301 may be representative of the location of the autonomous delivery vehicle 301 at a respective point in time, position of the traffic in the vicinity of the autonomous delivery vehicle 301 and may be collected while the autonomous delivery vehicle 301 is traveling towards the destination. The processor 201, in an embodiment, may determine the traffic impact data at the first location even before the autonomous delivery vehicle 301 may reach the first location. While probe data is described herein as being autonomous delivery vehicle probe data, example embodiments may be implemented with autonomous marine vehicle probe data, or non-motorized vehicle probe data (e.g., from bicycles, skate boards, horseback, etc.). According to the example embodiment described below with the probe data being from motorized autonomous delivery vehicles traveling along roadways, the probe data may include, without limitation, location data, (e.g. a latitudinal, longitudinal position, and/or height, GNSS coordinates, proximity readings associated with a radio frequency identification (RFID) tag, or the like), rate of travel, (e.g. speed), direction of travel, (e.g. heading, cardinal direction, or the like), device identifier, (e.g. vehicle identifier, user identifier, or the like), a time stamp associated with the data collection, or the like. The autonomous delivery vehicle 301 may comprise any device capable of collecting the aforementioned probe data.

Based on the determined traffic impact data, the processor 201 of the autonomous delivery vehicle 301 may compute a displacement threshold for displacing the autonomous delivery vehicle 301 from the first location. The processor 201 may compute the displacement threshold based on waiting time of traffic in the vicinity of the autonomous delivery vehicle 301. The processor 201 may determine to navigate the autonomous delivery vehicle 301 away from the first location if the number of vehicles stuck behind the autonomous delivery vehicle 301 is greater than a certain number or greater than a predetermined amount of time. In an embodiment, the processor 201 may determine to move the autonomous delivery vehicle 301 from the first location based on a negotiation between the autonomous delivery vehicle 301 and the traffic in the vicinity of the autonomous delivery vehicle 301 as a part of the vehicle-to-vehicle communication. In an embodiment, processor 201 may be directed by a central controller or the navigation system 115 to move the autonomous delivery vehicle based on control parameters, such as, time of halt, distance between the first location and the destination, occurrence of events at the first location, etc., pre-configured into the navigation system 115. In an embodiment, the determination of the traffic impact data and the displacement threshold may be performed by the user equipment 107 and 109; thereby the system 101 supports edge computing technology.

The processor 201 may determine navigation data for navigating the autonomous delivery vehicle 301 away from the first location, based on the displacement threshold and the dynamic traffic information in the geographical region. The processor 201 may direct the navigation system 115 of the autonomous delivery vehicle 301 on crossing the displacement threshold to move the autonomous delivery vehicle 301 away from the first location. The processor 201 may, in an embodiment determine a suitable parking location in proximity of the destination address. The processor 201 may assess availability of the parking locations (on-road and off-road parking locations) prior to navigating the autonomous delivery vehicle 301 from the first location. The parking location may be same as or different from the first location. If the parking location is different from the first location, the processor 201 may determine navigation data to navigate towards the parking location.

In an embodiment, the processor 201 may direct the navigation system 115 of the autonomous vehicle 301 to drive around in the geographical region based on the routing graph and the dynamic traffic information in the geographical region. In some embodiments, if the processor 201 assesses that there is no significant effect on the traffic due to the parking of the autonomous delivery vehicle 301 at the first location, the processor 201 may direct the navigation system 115 of the autonomous delivery vehicle 301 to stay put at the first location. In some embodiments, based on the location of the delivery person 303, the processor 201 may decide to displace the autonomous delivery vehicle 301 from the first location. That is, if the delivery person 303 is approaching the autonomous delivery vehicle 301 parked at the first location, the processor 201 may direct the navigation system 115 to wait at the first location until the delivery person 303 arrives. In an embodiment, if the delivery person 303 is away from the first location and may arrive after some time to the first location, the processor 201 may direct the navigation system 115 to circle around the block and return to the first location after a while using the routing graph and the dynamic traffic information. For navigating the autonomous delivery vehicle 301 away from the first location, the processor 201 may generate the navigation data, including navigation routes, parking locations around the navigation routes, etc.

In an embodiment, the processor 201 may continuously track the location of the delivery person 303 via the user equipment 109. The processor 201 may determine a parking location based on the track of the location of the delivery person 303. That is, based on the location of the delivery person 303, the processor 201 may determine to pick the delivery person 303 from a location different from the first location on the same pathway or a different pathway. The processor 201 may generate the navigation data to navigate to the pick-up location. The processor 201 may evaluate the parking possibilities in relation to the location of the delivery person 303 and the heading of the delivery person 303 to decide the pick-up location. The processor 201 may in turn communicate the details of the pick-up location to the delivery person 303 on his/her user equipment 109. The processor 201 may track the position of the delivery person 303 in communication with a scanning device carried by the delivery person 303. The scanning device may indicate to the processor 201 when the goods are delivered at the destination address.

The working environment 300 may further include a services platform 313, which may be used to provide navigation related functions and services 315a-315i to the application 307 running on the user equipment 107 and 109. The services 315a-315i may include such as navigation functions, speed adjustment functions, traffic related updates, weather related updates, warnings and alerts, parking related services, indoor mapping services and the like. The services 315a-315i may be provided by a plurality of content providers 311a-311j. In some examples, the content providers 311a-311j may access various SDKs from the services platform 309 for implementing one or more services. In an example, the services platform 313 may provide a suite of mapping and navigation related applications for OEM devices, such as the user equipment 107 and 109. The user equipment 107 and 109 may be configured to interface with the services platform 309, the content provider's services 311a-311j over the network 113. Thus, the services platform 313 may enable provision of cloud-based services for the user equipment 107 and 109, such as, storing the sensor data in an OEM cloud 111 in batches or in real-time and retrieving the stored sensor data for determining the dynamic traffic impact data. In some embodiments, the navigation control apparatus 103 may be configured to provide a repository of algorithms for controlling navigation of the autonomous delivery vehicle 301, in communication with the navigation system 115 of the autonomous delivery vehicle 301. For example, the navigation control apparatus 103 may include algorithms related to geocoding, routing (multimodal, intermodal, and unimodal), historical traffic data and real-time traffic data processing algorithms, sensor fusion algorithms, real-time position tracking algorithms, machine learning in location based solutions, natural language processing algorithms, artificial intelligence algorithms, and the like. The sensor data for the navigation control apparatus 103 may be collected using a plurality of technologies including but not limited to drones, sensors, connected cars, cameras, probes, chipsets and the like.

As noted above, the navigation control apparatus 103 of the system 101 may be embodied by a processing component, such as, the processor 201. However, in some embodiments, the navigation control apparatus 103 may be embodied as a chip or chip set. In other words, the navigation control apparatus 103 may comprise one or more physical packages (for example, chips) including materials, components and/or wires on a structural assembly (for example, a baseboard). The structural assembly may provide physical strength, conservation of size, and/or limitation of electrical interaction for component circuitry included thereon. The navigation control apparatus 103 may therefore, in some cases, be configured to implement an example embodiment of the present invention on a single "system on a chip." As such, in some cases, a chip or chipset may constitute a means for performing one or more operations for providing the functionalities described herein.

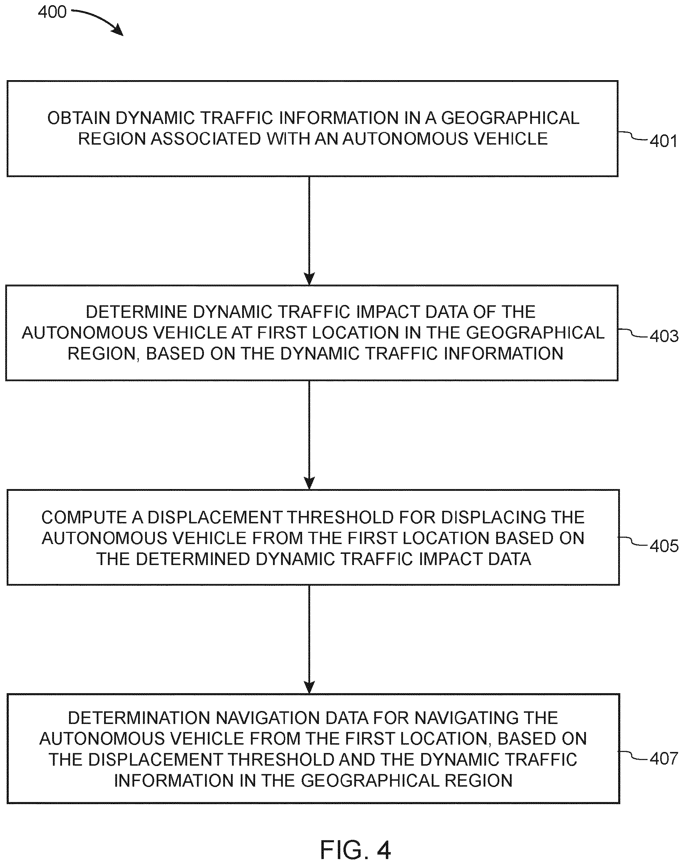

The user interface 309 of the user equipment 107 and 109 may in turn be in communication with the system 101 to provide output to the delivery person 303 in the autonomous delivery vehicle 301 and, in some embodiments, to receive an indication of an input from the delivery person 303. In some example embodiments, the user interface 309 may communicate with the navigation control apparatus 103 and display input and/or output of the navigation control apparatus 103. As such, the user interface 309 may include a display and, in some embodiments, may also include a keyboard, a mouse, a joystick, a touch screen, touch areas, soft keys, one or more microphones, a plurality of speakers, or other input/output mechanisms. In one embodiment, the navigation control apparatus 103 may comprise user interface circuitry as a part of the communication interface 205, configured to control at least some functions of one or more user interface elements such as a display and, in some embodiments, a plurality of speakers, a ringer, one or more microphones and/or the like. The processor 201 and/or user interface circuitry comprising the processor 201 may be configured to control one or more functions of one or more user interface elements through computer program instructions (for example, software and/or firmware) stored on a memory accessible to the processor 201. In some example embodiments, the processor 201 may be configured to provide a method for navigating an autonomous vehicle, the autonomous delivery vehicle 301 as will be discussed in conjunction with FIG. 4 as below.

FIG. 4 exemplarily illustrates a method 400 for navigating an autonomous vehicle, in accordance with an example embodiment. It will be understood that each block of the flow diagram of the method 400 may be implemented by various means, such as hardware, firmware, processor, circuitry, and/or other communication devices associated with execution of software including one or more computer program instructions. For example, one or more of the procedures described above may be embodied by computer program instructions. In this regard, the computer program instructions which embody the procedures described above may be stored by a memory 203 of the navigation control apparatus 103, employing an embodiment of the present invention and executed by a processor 201. As will be appreciated, any such computer program instructions may be loaded onto a computer or other programmable apparatus (for example, hardware) to produce a machine, such that the resulting computer or other programmable apparatus implements the functions specified in the flow diagram blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flow diagram blocks.

Accordingly, blocks of the flow diagram support combinations of means for performing the specified functions and combinations of operations for performing the specified functions for performing the specified functions. It will also be understood that one or more blocks of the flow diagram, and combinations of blocks in the flow diagram, may be implemented by special purpose hardware-based computer systems which perform the specified functions, or combinations of special purpose hardware and computer instructions. The method 400 illustrated by the flow diagram of FIG. 4 for navigating the autonomous delivery vehicle 301 may include, at step 401, obtaining dynamic traffic information in a geographical region associated with the autonomous delivery vehicle 301. The method 400, at step 403, may include determining dynamic traffic impact data of the autonomous delivery vehicle 301at a first location in the geographical region, based on the dynamic traffic information. At step 405, the method 400 may include computing a displacement threshold for displacing the autonomous delivery vehicle 301 from the first location based on the determined dynamic traffic impact data. Further, the method 400 may comprise, at step 407, determining navigation data for navigating the autonomous delivery vehicle 301 from the first location, based on the displacement threshold and the dynamic traffic information in the geographical region.

Additionally, the method 400 may include various other steps in addition to those shown in FIG. 4. For example, the method 400 may further include obtaining destination data indicating a destination of a user, a delivery person 303 associated with the autonomous delivery vehicle 301 and determining a parking location in proximity of the destination of the user, the delivery person 303. The parking location is one of same or different from the first location. The method 400 may further include updating the determined navigation data for navigating the autonomous delivery vehicle 301 from the first location to the parking location. Also, the method 400 may include tracking a location of the delivery person of the autonomous delivery vehicle 301 and determining a parking location based on the track of the location of the delivery person 303.

In an example embodiment, a system for performing the method of FIG. 4 above may comprise a processor (e.g. the processor 303) configured to perform some or each of the operations (401-407) described above. The processor may, for example, be configured to perform the operations (401-407) by performing hardware implemented logical functions, executing stored instructions, or executing algorithms for performing each of the operations. Alternatively, the system may comprise means for performing each of the operations described above. In this regard, according to an example embodiment, examples of means for performing operations 401-407 may comprise, for example, the processor 201 and/or a device or circuit for executing instructions or executing an algorithm for processing information as described above.

On implementing the method 400 disclosed herein, the end result generated by the system 101 is a tangible determination of navigation data for navigating an autonomous vehicle, the autonomous delivery vehicle 301. The system 101 may be capable of assessing the traffic disruption caused due to halting of the autonomous delivery vehicle 301 at a location on a pathway apart from an on-street parking location. The navigation data determined by the system 101 will assist the navigation system 115 of the autonomous delivery vehicle 301 to safely navigate in the geographical region, based on the dynamic traffic information in the region. The system 101 determines a smarter way to reduce the impact caused by the halting of the autonomous delivery vehicle 301 at a drop-off location. Along with this, the system 101 creates safer environments for commute of people in the geographical region without much traffic. The system 101 notifies the delivery person 303 about the displacement of the autonomous delivery vehicle 301 from the drop-off location and recommends shorter last mile connectivity for the delivery person 303 to reach the autonomous delivery vehicle 301. Implementation of the system 101 encourages the delivery service providers to employ autonomous delivery vehicles 301 to serve the purpose of delivery of packages and goods, thereby enabling a scalable approach for delivery vehicles in cities. The system 101 may allow delivery companies to maintain a high customer satisfaction for deliveries of good and packages without impacting the traffic in the cities.

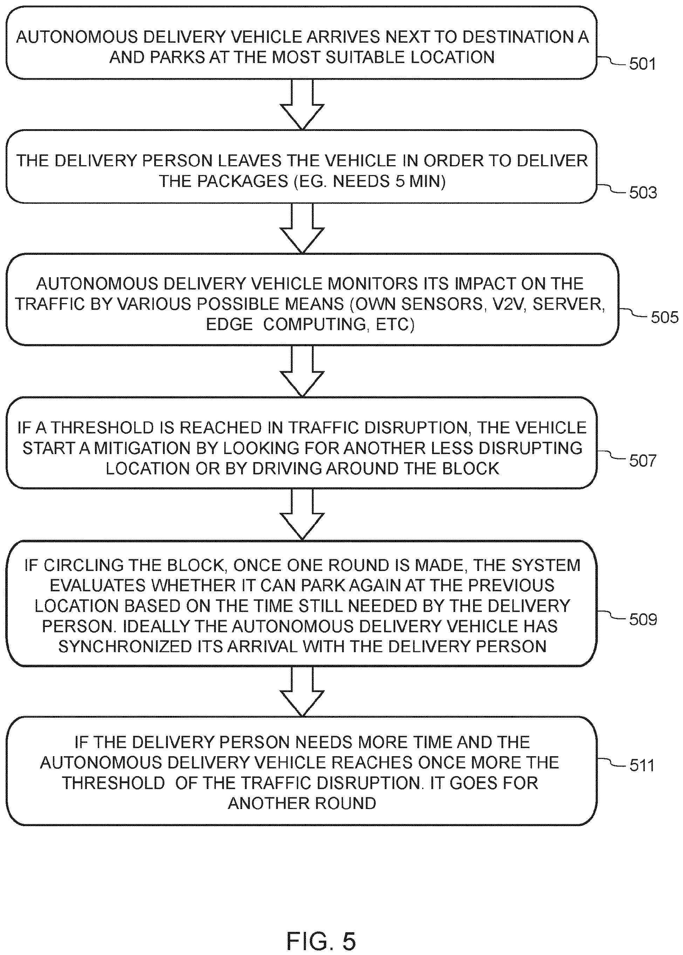

FIG. 5 illustrates a flowchart comprising steps for navigating the autonomous delivery vehicle 301 from the first location by the navigation control apparatus 103, in accordance with an example embodiment. As exemplarily illustrated in FIG. 5, at 501, the autonomous delivery vehicle 301 arrives at a first location in the vicinity of the destination. The first location may be a suitable location in the vicinity of the destination. At 503, as exemplarily illustrated, the delivery person 303 may leave the autonomous delivery vehicle 301 in order to deliver packages at the destination address. The delivery person 303 may need approximately 5 minutes to deliver and return to the autonomous delivery vehicle 301. At 505, the navigation control apparatus 103 monitors impact on the traffic caused due to the parking of the autonomous delivery vehicle 301 at the first location, based on the dynamic traffic information obtained from the sensors 305 in/on the autonomous delivery vehicle 301, based on the vehicle-to-vehicle communication, etc., as disclosed in the detailed description of FIG. 3. At 507, as exemplarily illustrated, the navigation control apparatus 103 determines a displacement threshold and the navigation control apparatus 103 determines if the displacement threshold is reached. If the displacement threshold is reached in the traffic disruption, the navigation control apparatus 103 mitigates the traffic disruption by searching for another less disrupting parking location or by determining a navigation route around the block. The autonomous delivery vehicle 301 may drive around the block as suggested by the navigation control apparatus 103. At step 509, the navigation control apparatus 103 determines, if a circle around the block is complete. Once a round is complete, the navigation control apparatus 103 may evaluate whether the autonomous delivery vehicle 301 may be parked at the first location based on the time of arrival of the delivery person 303. Meanwhile, the navigation control apparatus 103 synchronizes the processing of alternatives of parking the autonomous delivery vehicle 301 with the location of the delivery person 303. As exemplarily illustrated, in step 511, if the delivery person 303 needs more time to reach the autonomous delivery vehicle 301 and if the navigation control apparatus 103 determines the displacement threshold is again reached at the new parking location, the navigation control apparatus 103 may suggest the navigation system 115 of the autonomous delivery vehicle 301 to take another round around the block based on the dynamic traffic information.

FIG. 6 illustrates a scenario where an autonomous delivery vehicle 301 is navigated by the system 101 including the navigation control apparatus 103. As exemplarily illustrated, the autonomous delivery vehicle 301 is parked at a first location in vicinity of the destination address of delivery of goods. A delivery person 303 delivers the goods at the delivery address. The navigation control apparatus 103 in communication with the sensors 305 in/on the autonomous delivery vehicle 301 obtains dynamic traffic information in the vicinity of the autonomous delivery vehicle 301. The sensors 305 determine that the vehicles 603, 605, 607 and 611 and pedestrians 601 are in the vicinity of the autonomous delivery vehicle 301. The navigation control apparatus 103 in communication with the map database 105 obtains the routing graph, street geometry in the vicinity of the first location.

The navigation control apparatus obtains information about the lanes 617, 619, etc., the timing of the traffic signal 615, the position of the divider 621, the position of the pavement 623, etc. The vehicles 603, 605, 607 and 611 in the vicinity of the autonomous delivery vehicle 301 communicate with the navigation system 115 of the autonomous delivery vehicle 301. The vehicles 603 and 605 may indicate to the navigation control apparatus 103 that they are stuck behind the autonomous delivery vehicle 301 for a certain amount of time. The navigation control apparatus 103 may also determine traffic impact data including flow rate of vehicles past the autonomous delivery vehicle 301 and number of vehicles 603 and 605 and pedestrians 601 stuck behind the autonomous delivery vehicle 301. The navigation control apparatus 103 may also determine the number of vehicles 607 and 611 on the other side of the road 617 and the traffic signal 615 timings on the other side of the road 617. Based on these parameters, the navigation control apparatus 103 may compute a displacement threshold assessing if the traffic congestion caused due to the autonomous delivery vehicle 301 may ease after certain duration. Since it appears in the FIG. 6 that the autonomous delivery vehicle 301 is blocking the entire lane 619 and the traffic, vehicles 603 and 605 and pedestrians 601 seems to be accumulating behind the autonomous delivery vehicle 301, the navigation control apparatus 103 may direct the navigation system 115 of the autonomous delivery vehicle 301 to move from the first location and take a round in the geographical region. Simultaneously, the navigation control apparatus 103 may be tracking the location of the delivery person 303.

Based on the location of the delivery person 303, the navigation control apparatus 103 may direct the navigation system 115 to navigate to a pick-up location to pick the delivery person 303 as soon as possible. In an embodiment, if the delivery person 303 may take some more time, the navigation control apparatus 103 may direct the navigation system 115 of the autonomous delivery vehicle 301 to come back to the first location after the round in the geographical region or find a suitable on-street or off-street parking spot in the geographical region closer to the destination or the meeting point of the delivery person 303. In an embodiment, the autonomous delivery vehicle 301 may be occupying an on-street parking spot of a taxi 619. In such a scenario too, the autonomous delivery vehicle 301 halting at the first parking location congests the road and thus, has to be navigated away from the first location.

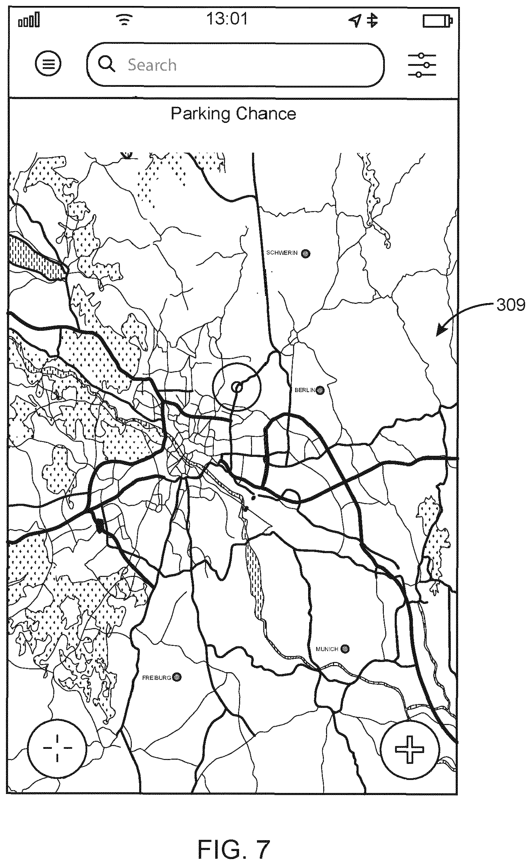

FIG. 7 illustrates a user interface 309 showing real-time navigation data generated by navigation control apparatus 103 to assist a user, the delivery person 303 of the autonomous delivery vehicle 301. As exemplarily illustrated, the user interface 309 of the user equipment 109 may provide navigation data to the delivery person 303 using the autonomous delivery vehicle 301. The different representations of the navigation assistance may be in the form of a map with color coded or patterned road links indicating traffic conditions on the route, locations of on-street parking spots, off-street parking spots, etc. The representations related to the on-street parking and off-street parking spots on the user interface 309 of the user equipment 107 may be used by the navigation system 115 of the autonomous delivery vehicle 301 to determine a suitable parking location for the autonomous delivery vehicle 301 in attempting to limit the impact on traffic, while waiting for the delivery person 303 to complete his/her task. In an embodiment, the navigation control apparatus 103 may render recommendations to the delivery person 303 on the user interface 309 of the user equipment 109 for reaching the autonomous delivery vehicle 301 in a shorter time. In an embodiment, the navigation control apparatus 103 may also notify the delivery person 303 on the user interface 309 about the amount of time, the autonomous delivery vehicle 301 may be parked at the first location. In an embodiment, the navigation control apparatus 103 may also notify the delivery person 303 about change in the location of the autonomous delivery vehicle 301 from the drop-off location.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A method for navigating an autonomous vehicle, the method comprising:
obtaining dynamic traffic information in a geographical region associated with the autonomous vehicle;
determining dynamic traffic impact data of the autonomous vehicle at a first location in the geographical region, based on the dynamic traffic information;
computing a displacement threshold for displacing the autonomous vehicle from the first location based on the determined dynamic traffic impact data; and
determining navigation data for navigating the autonomous vehicle from the first location, based on the displacement threshold and the dynamic traffic information in the geographical region.

2. The method of claim 1, further comprising
obtaining destination data indicating a destination of a user associated with the autonomous vehicle; and
determining a parking location in proximity of the destination of the user.

3. The method of claim 2, further comprising updating the determined navigation data for navigating the autonomous vehicle from the first location to the parking location.

4. The method of claim 3, wherein the parking location is one of same or different from the first location.

5. The method of claim 1, further comprising:
tracking a location of a user of the autonomous vehicle; and
determining a parking location based on the track of the location of the user.

6. The method of claim 1, wherein the dynamic traffic information comprises one or more of destination data of a user associated with the autonomous vehicle, traffic data in the geographical region, time data associated with the traffic data, street geometry data of one or more pathways in the geographical region, traffic light timing data in the geographical region, functional class of the one or more pathways in the geographical region, or environmental conditions in the geographical region.

7. The method of claim 1, wherein the dynamic traffic impact data comprises at least one of volume of traffic in vicinity of the autonomous vehicle or flow rate of the traffic in the vicinity of the autonomous vehicle.

8. The method of claim 1, wherein the dynamic traffic impact data is determined from one of sensor data generated by a plurality of sensors or communication data transmitted by traffic in vicinity of the autonomous vehicle.

9. An apparatus for navigating an autonomous vehicle, the apparatus comprising:
at least one non-transitory memory configured to store instructions;
at least one processor configured to execute the instructions to:
obtain dynamic traffic information in a geographical region associated with the autonomous vehicle;
determine dynamic traffic impact data of the autonomous vehicle at a first location in the geographical region, based on the dynamic traffic information;
compute a displacement threshold for displacing the autonomous vehicle from the first location based on the determined dynamic traffic impact data; and
determine navigation data for navigating the autonomous vehicle from the first location, based on the displacement threshold and the dynamic traffic information in the geographical region.

10. The apparatus of claim 9, wherein the at least one processor is further configured to:
obtain destination data indicating a destination of a user associated with the autonomous vehicle; and
determine a parking location in proximity of the destination of the user.

11. The apparatus of claim 10, wherein the at least one processor is further configured to update the determined navigation data for navigating the autonomous vehicle from the first location to the parking location.

12. The apparatus of claim 9, wherein the dynamic traffic information comprises one or more of destination data of a user associated with the autonomous vehicle, traffic data in the geographical region, time data associated with the traffic data, street geometry data of one or more pathways in the geographical region, traffic light timing data in the geographical region, functional class of the one or more pathways in the geographical region, or environmental conditions in the geographical region.

13. The apparatus of claim 9, wherein the dynamic traffic impact data comprises at least one of volume of traffic in vicinity of the autonomous vehicle or flow rate of traffic in the vicinity of the autonomous vehicle.

14. The apparatus of claim 9, wherein the at least one processor is configured to determine the dynamic traffic impact data from one of sensor data generated by a plurality of sensors or communication data transmitted by traffic in vicinity of the autonomous vehicle.

15. A system for navigating an autonomous vehicle, the system comprising:
a map database configured to store map data associated with a geographical region; and
a navigation control apparatus communicatively coupled to the map database, the navigation control apparatus comprising:
at least one non-transitory memory configured to store computer program code instructions;
at least one processor configured to execute the computer program code instructions to:
obtain dynamic traffic information in the geographical region associated with the autonomous vehicle;
determine dynamic traffic impact data of the autonomous vehicle at a first location in the geographical region, based on the dynamic traffic information;
compute a displacement threshold for displacing the autonomous vehicle from the first location based on the determined dynamic traffic impact data;
obtain the map data of the geographical region from the map database;
determine navigation data for navigating the autonomous vehicle from the first location, based on the displacement threshold, the dynamic traffic information, and the obtained map data of the geographical region.
